# EUROPEAN PATENT APPLICATION

(11) **EP 1 228 909 A2**
(43) Date of publication of application: **07.08.2002**
(21) Application number: 02002254.7
(22) Date of filing: 30.01.2002
(51) Int. Cl.: B60H 1/32, F04B 49/00

(54) **Control device of variable displacement compressor**

(30) Priority: 31.01.2001 JP 2001023721
(71) Applicant: Kabushiki Kaisha Toyota Jidoshokki, Kariya-shi, Aichi-ken (JP)
(72) Inventor: Murase, Masakazu, Kariya-shi, Aichi-ken (JP); Yokomachi, Naoya, Kariya-shi, Aichi-ken (JP)
(74) Representative: Leson, Thomas Johannes Alois, Dipl.-Ing.

(57) **Abstract**

An apparatus controls a variable displacement compressor used in a refrigerant circuit. The compressor includes a drive shaft (6), which is rotated by an engine (E). When the drive shaft (6) rotates, the compressor compresses refrigerant sent from the external refrigerant circuit and discharges the compressed refrigerant to an external refrigerant circuit (30). When the displacement of the compressor is minimized, the circulation of refrigerant in the refrigerant circuit is stopped. The apparatus has a control mechanism (27, 28, CV) for varying the pressure in the crank chamber. A detector (76, 77, 78, 79) detects a physical quantity that reflects the heating status of the compressor. When the compressor displacement is minimized and the quantity detected by the detector (76, 77, 78, 79) indicates that the heating status of the compressor is deteriorating, a controller (70) commands the control mechanism (27, 28, CV) such that the displacement of the compressor is greater than the minimum displacement.

## Description

### BACKGROUND OF THE INVENTION

The present invention relates to a control device for controlling the displacement of a variable displacement compressor used in a refrigerant circuit of a vehicular air conditioner.

A typical variable displacement compressor used for a vehicular air conditioner is a clutchless type, or has no clutch mechanism on the power transmission path between the compressor and a vehicle engine. The displacement of the compressor is varied by changing the pressure in a crank chamber. When there is no need for cooling, for example, when an air conditioner is off, the compressor displacement is minimized.

To reduce the load applied on the engine when cooling is not demanded, the minimum displacement of the clutchless compressor is set in the vicinity of zero. Thus, when the displacement is minimized, the flow rate of refrigerant in the refrigerant circuit is decreased. This reduces the amount of lubricant that flows into the compressor with refrigerant. Hence, in the prior art, the circulation of refrigerant through an external refrigerant circuit is stopped when the compressor displacement is minimized. At the same time, an internal refrigerant circuit is formed in the compressor, and refrigerant circulates from a discharge chamber to compression chambers. Accordingly, lubricant oil in the refrigerant lubricates the moving parts.

When the vehicle is used, for example, in winter or in the night, the air conditioner switch is likely to be off for a long time. That is, the compressor operates at the minimum displacement for a long time. In other words, the refrigerant circulates within the compressor for a long time. An extended period of the internal circulation of refrigerant in the compressor excessively increases the temperature of refrigerant and lubricant, which may heats the parts of the compressor excessively.

Particularly, when carbon dioxide is used as refrigerant, the refrigerant pressure is significantly higher than a case when chlorofluorocarbon is used as refrigerant. Therefore, the temperature of the interior of the compressor tends to be excessively increased when the compressor displacement is minimized.

### SUMMARY OF THE INVENTION

Accordingly, it is an objective of the present invention to provide a control device that improves the durability of a variable displacement compressor.

To achieve the foregoing and other objectives and in accordance with the purpose of the present invention, an apparatus is provided. The apparatus controls a variable displacement compressor used in a refrigerant circuit. The refrigerant circuit includes the compressor and an external refrigerant circuit, which is connected to the compressor. The compressor includes a drive shaft, which is rotated by an external drive source. When the drive shaft rotates, the compressor compresses refrigerant sent from the external refrigerant circuit and discharges the compressed refrigerant to the external refrigerant circuit. The compressor varies the displacement of the compressor in accordance with the pressure of a crank chamber. When the displacement of the compressor is minimized, the circulation of refrigerant in the refrigerant circuit is stopped. The apparatus comprises a control mechanism, a detector and a controller. The control mechanism varies the pressure in the crank chamber. The detector detects a physical quantity that reflects the heating status of the compressor. When the compressor displacement is minimized and the quantity detected by the detector indicates that the heating status of the compressor is deteriorating, the controller commands the control mechanism to change the crank chamber pressure such that the displacement of the compressor is greater than the minimum displacement.

The present invention also provides a method for controlling a variable displacement compressor used in a refrigerant circuit. The refrigerant circuit includes the compressor and an external refrigerant circuit, which is connected to the compressor. The compressor includes a drive shaft, which is rotated by an external drive source. When the drive shaft rotates, the compressor compresses refrigerant sent from the external refrigerant circuit and discharges the compressed refrigerant to the external refrigerant circuit. The compressor varies the displacement of the compressor in accordance with the pressure of a crank chamber. When the displacement of the compressor is minimized, the circulation of refrigerant in the refrigerant circuit is stopped. The method includes detecting a physical quantity that reflects the heating status of the compressor, and setting the displacement of the compressor to be greater than the minimum displacement of the compressor when the quantity detected by the detector indicates that the heating status of the compressor is deteriorating.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which;
Fig. 1 is a cross-sectional view illustrating a swash plate type variable displacement compressor according to a first embodiment of the present invention;
Fig. 2 is a cross-sectional view illustrating the control valve in the compressor of Fig. 1;
Fig. 3 is a flowchart showing a procedure executed by a controller; and
Fig. 4 is a cross-sectional view illustrating a compressor according to a second embodiment of the present invention.

### DETAILED DESCRIPTION OF THE PREFERRED EMBODIMENTS

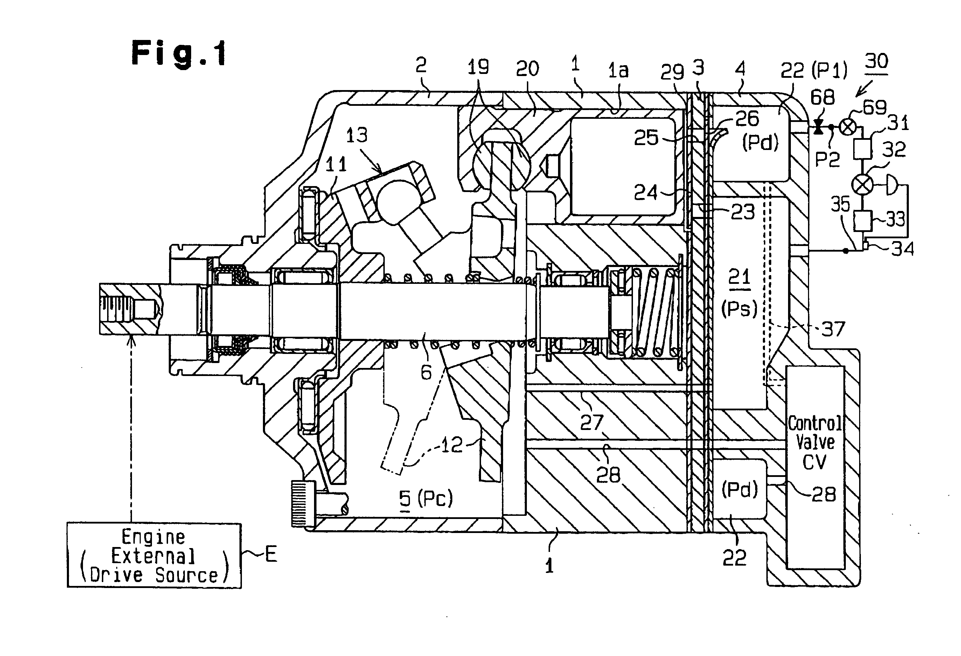

A control device of a swash plate type variable displacement compressor according to a first embodiment of the present invention will now be described with reference to Figs 1 to 3. The compressor is used in a vehicular air conditioner.

### (Swash Plate Type Variable Displacement Compressor)

As shown in Fig. 1, the compressor includes a cylinder block 1, a front housing member 2 connected to the front end of the cylinder block 1, and a rear housing member 4 connected to the rear end of the cylinder block 1. A valve plate assembly 3 is located between the rear housing member 4 and the cylinder block 1. The cylinder block 1, the front housing member 2, and the rear housing member 4 form the housing of the compressor.

A crank chamber 5 is defined between the cylinder block 1 and the front housing member 2. A drive shaft 6 extends through the crank chamber 5 and is rotatably supported by the crank chamber 5. The drive shaft 6 is directly connected to an external drive source, which is an engine E in this embodiment. There is no clutch mechanism, such as an electromagnetic clutch, is located between the drive shaft 6 and the engine E. Thus, the drive shaft 6 is always rotated when the engine E is running.

Since the compressor does not have an electromagnetic clutch, which is expensive and heavy, the cost and weight of the compressor are reduced. Also, since the shock created due to activation and deactivation of an electromagnetic clutch is eliminated, the compressor improves the vehicle performance and response.

A lug plate 11 is fixed to the drive shaft 6 in the crank chamber 5 to rotate integrally with the drive shaft 6. A drive plate, which is a swash plate 12 in this embodiment, is accommodated in the crank chamber 5. The swash plate 12 slides along the drive shaft 6 and inclines with respect to the axis of the drive shaft 6. A hinge mechanism 13 is provided between the lug plate 11 and the swash plate 12. The hinge mechanism 13 and the lug plate 11 cause the swash plate 12 to rotate integrally with the drive shaft 6.

Cylinder bores la (only one is shown in Fig. 1) are formed in the cylinder block 1 at constant angular intervals about the axis of the drive shaft 6. Each cylinder bore la accommodates a single headed piston 20 such that the piston 20 can reciprocate in the cylinder bore la. The opening of each cylinder bore la is closed by the valve plate assembly 3 and the corresponding piston 20. A compression chamber 29 is defined in each cylinder bore la. The volume of each compression chamber 29 varies in accordance with the reciprocation of the corresponding piston 20. The front end of each piston 20 is coupled to the periphery of the swash plate 12 through a pair of shoes 19. The swash plate 12 is rotated as the drive shaft 6 rotates. Rotation of the swash plate 12 is converted into reciprocation of each piston 20 by the corresponding pair of shoes 19.

A suction chamber 21 and a discharge chamber 22 are defined between the valve plate assembly 3 and the rear housing member 4. The discharge chamber 22 is located about the suction chamber 21. The valve plate assembly 3 has suction ports 23, suction valve flaps 24, discharge ports 25, and discharge valve flaps 26. Each set of a suction port 23, a suction valve flap 24, a discharge port 25, and a discharge valve flap 26 corresponds to one of the cylinder bores la. Each cylinder bore la is connected to the suction chamber 21 through the corresponding suction port 23. Each cylinder bore la is also connected to the discharge chamber 22 through the corresponding discharge port 25.

When each piston 20 moves from the top dead center position to the bottom dead center position, refrigerant gas in the suction chamber 21 is drawn into the corresponding cylinder bore la via the corresponding suction port 23 and suction valve flap 24. When each piston 20 moves from the bottom dead center position to the top dead center position, refrigerant gas in the corresponding cylinder bore 1a is compressed to a predetermined pressure and is discharged to the discharge chamber 22 via the corresponding discharge port 25 and discharge valve flap 26.

As shown in Fig. 1, a bleed passage 27 and a supply passage 28 are formed in the compressor housing. The bleed passage 27 connects the crank chamber 5 with the suction chamber 21, which is exposed to suction pressure Ps. The suction chamber 21 is a suction pressure zone, or a low pressure zone. The supply passage 28 connects the discharge chamber 22, which is exposed to discharge pressure Pd, with the crank chamber 5. The discharge chamber 22 is a discharge pressure zone, or a high pressure zone. The supply passage 28 is regulated by a control valve CV. The bleed passage 27, the supply passage 28, and the control valve CV form means for controlling the pressure in the crank chamber 5, or crank chamber pressure controlling means. The pressure in the crank chamber will hereafter be referred to as crank chamber pressure Pc.

The opening of the control valve CV is adjusted to control the flow rate of highly pressurized gas supplied to the crank chamber 5 through the supply passage 28. The crank pressure Pc is determined by the ratio of the refrigerant gas supplied to the crank chamber 5 through the supply passage 28 and the flow rate of refrigerant gas conducted out from the crank chamber 5 through the bleed passage 27. As the crank chamber pressure Pc varies, the difference between the crank chamber pressure Pc and the pressure in the cylinder bores la varies, which changes the inclination angle of the swash plate 12. Accordingly, the stroke of each piston 20, or the compressor displacement, is varied. As the control valve CV decreases the opening degree of the supply passage 28, the compressor displacement is increased, and as the control valve CV increases the opening degree of the supply passage 28, the compressor displacement is decreased.

### (Refrigerant Circuit)

As shown in Fig. 1, a refrigerant circuit of the vehicular air conditioner is formed by the compressor and an external refrigerant circuit 30. In this embodiment, carbon dioxide is used as the refrigerant. The external refrigerant circuit 30 includes a condenser 31, an expansion valve 32, and an evaporator 33.

A shut-off valve 69 is located in a part of the refrigerant passage of the external refrigerant circuit 30 between the discharge chamber 22 and the condenser 31. When the pressure at a side that is connected to the discharge chamber 22 falls below a predetermined level, the shut-off valve 69 shuts off the refrigerant passage to stop the circulation of refrigerant through the external refrigerant circuit 30. The shut-off valve 69 may be a differential valve that mechanically detects the pressure difference. Alternatively, the shut-off valve 69 may be an electromagnetic valve that is controlled by a controller 70, which will be discussed below, according to a detection value of a discharge pressure sensor (not show). Further, the shut-off valve 69 may be mechanically coupled to the swash plate 12 to shut off the refrigerant passage when the inclination angle of the swash plate 12 is minimized.

A first pressure monitoring point P1 is located in the discharge chamber 22. A second pressure monitoring point P2 is located in the refrigerant passage at a part that is spaced downstream from the first pressure monitoring point P1 toward the condenser 31 by a predetermined distance. The second pressure monitoring point P2 is closer to the discharge chamber 22 than the shut-off valve 69. A fixed restrictor 68 is located in the refrigerant passage between the pressure monitoring points P1 and P2.

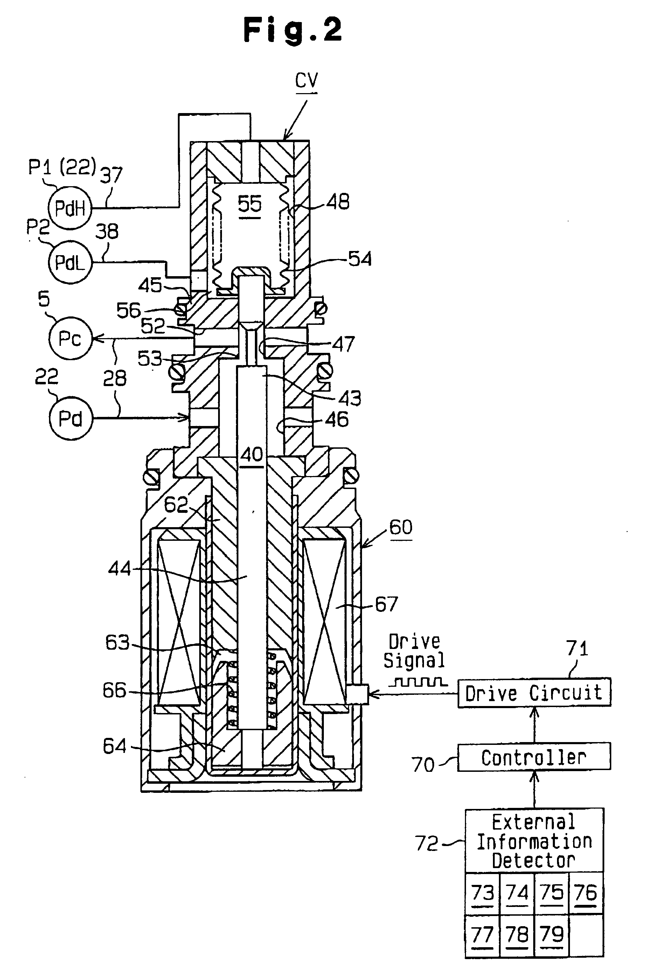

As shown in Fig. 2, the control valve CV includes a valve housing 45. A valve chamber 46, a communication passage 47, and a pressure sensing chamber 48 are defined in the valve housing 45. A transmission rod 40 is extends through the valve chamber 46 and the communication passage 47. The transmission rod 40 moves in the axial direction, or in the vertical direction as viewed in the drawing. The valve chamber 46 is selectively connected to and disconnected from the communication passage 47 according to the position of the transmission rod 40. The communication passage 47 is disconnected from the pressure sensing chamber 48 by the upper portion of the transmission rod 40.

The valve chamber 46 is connected to the discharge chamber 22 through an upstream section of the supply passage 28. The communication passage 47 is connected to the crank chamber 5 through a downstream section of the supply passage 28. The valve chamber 46 and the communication passage 47 form a part of the supply passage 28.

A valve body 43 is formed in the axial center portion of the transmission rod 40. The valve body 43 is located in the valve chamber 46. A step defined between the valve chamber 46 and the communication passage 47 functions as a valve seat 53, and the communication passage 47 functions as a valve hole. When the transmission rod 40 is moved from the position of Fig. 2, or the lowermost position, to the uppermost position, at which the valve body 43 contacts the valve seat 53, the communication passage 47 is disconnected from the valve chamber 46. That is, the valve body 43 controls the opening degree of a control passage, which connects the crank chamber 5 to a pressure zone, in this case the supply passage 28.

A pressure sensing member, which is a bellows 54 in this embodiment, is located in the pressure sensing chamber 48. The upper end of the bellows 54 is fixed to the valve housing 45. The bellows 54 divides the pressure sensing chamber 48 into a first pressure chamber 55, which is the interior of the bellows 54, and a second pressure chamber 56, which is the exterior of the bellows 54. The upper end of the transmission rod 40 is fitted into the lower end of the bellows 54.

The first pressure chamber 55 is connected to the first pressure monitoring point P1, which is the discharge chamber 22, through a first pressure introduction passage 37. The second pressure chamber 56 is connected to the second pressure monitoring point P2 through a second pressure introduction passage 38. Therefore, the first pressure chamber 55 is exposed to the pressure PdH monitored at the first pressure monitoring point P1, and the second pressure chamber 56 is exposed to the pressure PdL monitored at the second pressure monitoring point P2. In this embodiment, the pressure sensing chamber 48, the bellows 54, the first pressure chamber 55, and the second pressure chamber 56 form a pressure sensing mechanism.

An actuator, which is a solenoid 60 in this embodiment, is located at the lower portion of the valve housing 45. The solenoid 60 includes a solenoid chamber 63, which is defined in the lowest portion of the valve housing 45. A stationary iron core 62 is located at the upper portion of the solenoid chamber 63. A movable iron core 64 is located below the stationary core 62. The movable core 64 moves along the axis of the valve housing 45. A guide portion 44 of the transmission rod 40 extends through and is slidably supported by the stationary core 62. The lower end of the transmission rod 40 is fixed to the movable core 64 in the solenoid chamber 63. A valve body urging spring 66 is located in the solenoid chamber 63 between the stationary core 62 and the movable core 64. The spring 66 urges the transmission rod 40 (the valve body 43) downward as viewed in Fig. 2 through the movable core 64.

A coil 67 is wound about the stationary core 62 and the movable core 64. The coil 67 is electrically connected to a drive circuit 71, which is controlled by a controller 70. The controller 70 is connected to an external information detecting device 72. According to external information sent from the detecting device 72, the controller 70 commands the drive circuit 71 to send drive signals to the coil 67. The coil 67 generates an electromagnetic force that corresponds to the level of the current from the drive circuit 71 between the movable core 64 and the stationary core 62. The current to the coil 67 is controlled by changing the applied voltage, thus force is applied to the pressure sensing member in accordance with external commands from the controller. Specifically, the applied voltage is controlled by pulse-width-modulation (PWM).

The external information detecting device (external information detector) 72 includes various sensors. The sensors of the detecting device 72 includes an air-conditioner switch 73 (ON/OFF switch of the air conditioner), a temperature adjuster 74 for setting a desired temperature in the passenger compartment, a first temperature sensor 75 for detecting the temperature in the vehicle passenger compartment, a second temperature sensor 76 for detecting the temperature of the outside air, a third temperature sensor 77 for detecting the temperature of the compressor housing (housing temperature), a fourth temperature sensor 78 for detecting the temperature of fluid (refrigerant and lubricant) in the compressor, and a rotation speed sensor 79 for detecting the speed of the output shaft of the external drive source, engine E. There is one-to-one correspondence between the speed of the engine output shaft and the speed of the compressor drive shaft 6.

In this embodiment, the second temperature sensor 76, the third temperature sensor 77, the fourth temperature sensor 78, and the rotation speed sensor 79 function as a detector for detecting the heating status of the compressor.

When the refrigerant temperature in the compressor increases, the housing temperature increases. when the refrigerant temperature in the compressor decreases, the housing temperature decreases. That is, the housing temperature is a physical quantity that reflects the temperature of refrigerant in the compressor. The housing temperature and the refrigerant temperature are physical quantities that reflect the heating status of the compressor. Therefore, like the fourth temperature sensor 78, the third temperature sensor 77 can be regarded as a refrigerant temperature sensor that detects the temperature of fluid in the compressor. When the external temperature increases or when the engine speed (the speed of the drive shaft 6) increases, the refrigerant temperature in the compressor increases. When the external temperature or the engine speed is decreased, the refrigerant temperature is decreased. The external temperature and the engine speed are physical quantities that reflect the refrigerant temperature in the compressor, or the heating status of the compressor.

### (Operation Characteristics of Control Valve)

The position of the transmission rod 40, or the valve opening of the control valve CV, is controlled in the following manner.

As shown in Fig. 2, when the coil 67 is supplied with no electric current (duty ratio = 0%), the position of the transmission rod 40 is dominantly determined by the downward force of the bellows 54 and the downward force of the spring 66. Thus, the transmission rod 40 is placed at its lowermost position, and the communication passage 47 is fully opened. The difference between the crank chamber pressure Pc and the pressure in the compression chambers 29 thus becomes great. As a result, the inclination angle of the swash plate 12 is minimized, and the discharge displacement of the compressor is also minimized.

When the air conditioner switch 73 is off or when there is no cooling load even if the switch 73 is on (for example, when the temperature in the passenger compartment is significantly lower than the target temperature), the controller 70 sets the duty ratio of current supplied to the coil 67 at 0%, thereby minimizing the compressor displacement. When the compressor displacement is minimized, the pressure at one side of the shut-off valve 69 that is exposed to the pressure of the discharge chamber 22 falls below a predetermined level. This closes the shut-off valve 69 and thus stops the circulation of refrigerant through the external refrigerant circuit 30. Since the minimum inclination angle of the swash plate 12 is not zero, refrigerant gas is drawn into the compression chamber 29 from the suction chamber 21, compressed, and discharged to the discharge chamber 22 even if the compressor displacement is minimized.

Accordingly, an internal refrigerant circuit is formed in the compressor. The internal circuit includes the discharge chamber 22, the supply passage 28, the crank chamber 5, the bleed passage 27, the suction chamber 21, and the compression chambers 29. Refrigerant, together with lubricant, circulates in the internal circuit. Thus, even if refrigerant containing lubricant does not flow into the compressor from the external refrigerant circuit 30, the moving parts (for example, the swash plate 12 and the shoes 19) are reliably lubricated.

A minimum duty ratio, which is greater than 0%, is supplied to the coil 67 of the control valve CV when, for example, there is cooling load while the air conditioner switch 73 is on. In this state, the upward electromagnetic force surpasses the resultant of the downward forces of the bellows 54 and the spring 66, which moves the transmission rod 40 upward. The resultant of the upward electromagnetic force and the downward force of the spring 66 acts against the resultant of the forces of the bellows 54 and the force based on the pressure difference ΔPd. The position of the valve body 43 of the transmission rod 40 relative to the valve seat 53 is determined such that upward and downward forces are balanced.

As described above, the target value of the pressure difference ΔPd is determined by the duty ratio of current supplied to the coil 67. The control valve CV automatically determines the position of the transmission rod 40 according to changes of the pressure difference ΔPd to maintain the pressure difference ΔPd to the target value. The target value of the pressure difference ΔPd is externally changed by adjusting the duty ratio of current supplied to the coil 67.

### (Characteristics of the Present Invention)

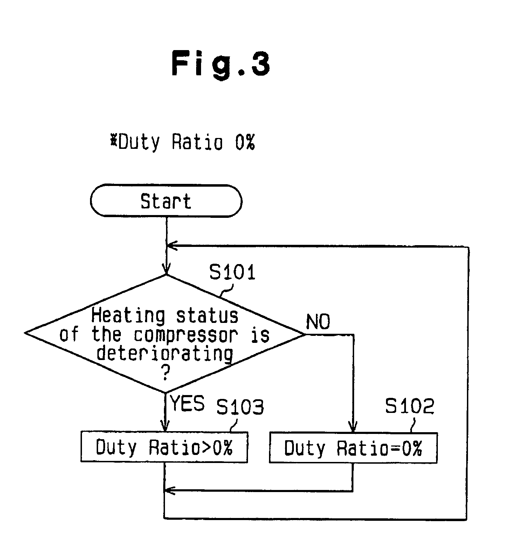

When the duty ratio of current supplied to the coil 67 is 0%, or when the compressor displacement is minimized and refrigerant circulates within the internal circuit of the compressor, the controller 70 executes the routine shown in Fig. 3.

In step S101, the controller 70 determines whether the heating status of the compressor is deteriorating based on physical quantities detected by the temperature sensors 76-79. The heating status of the compressor is judged to be deteriorating when any one of the following conditions is satisfied: the external temperature is equal to or higher than a predetermined referential value; the actual housing temperature is equal to or higher than a predetermined referential value; the actual refrigerant temperature is equal to or higher than a referential value; and the actual engine speed has been equal to or higher than a predetermined referential value for a predetermined period.

When the outcome of step S101 is negative, controller 70 proceeds to step S102. In step S102, the controller 70 maintains the duty ratio of current supplied to the coil 67 at 0%, which corresponds to the off state of the air conditioner switch 73 or no cooling load. That is, the compressor displacement is maintained at the minimum level, and the refrigerant continues circulating within the compressor.

If the outcome of step S101 is positive, that is, if the heating status of the compressor is deteriorating, the controller 70 proceeds to step S103. In step S103, the controller 70 changes the duty ratio of current supplied to the coil 67 from 0% to, for example, an intermediate value in the range. This procedure is referred to as protective procedure in this embodiment. When the protective procedure is started, the compressor displacement is increased from the minimum displacement, which starts the circulation of refrigerant through the external refrigerant circuit 30. Thus, high temperature refrigerant and lubricant in the compressor are discharged from the compressor, and relatively cold refrigerant and lubricant is drawn into the compressor from the external refrigerant circuit 30. This prevents the temperature of the interior of the compressor from being excessively high. In other words, the parts of the compressor are not excessively heated. Further, as the compressor displacement is increased, lubricant is sufficiently provided to the interior of the compressor, which improves lubrication of the moving parts of the compressor.

The illustrated embodiment has the following advantages.
(1) The parts of the compressor are prevented from being excessively heated, and the moving parts are reliably lubricated. Accordingly, the durability of the compressor is improved. Therefore, the illustrated embodiment is advantageous when using carbon dioxide refrigerant, the pressure of which can be significantly higher than that of chlorofluorocarbon refrigerant, as refrigerant.
(2) The target value of the pressure difference ΔPd is determined by the duty ratio of current supplied to the coil 67. The control valve CV automatically determines the position of the transmission rod 40 according to changes of the pressure difference ΔPd to maintain the pressure difference ΔPd to the target value. The target value of the pressure difference ΔPd is externally changed by adjusting the duty ratio of current supplied to the coil 67. Since the pressure difference ΔPd represents the flow rate of refrigerant in the refrigerant circuit, the refrigerant flow rate is directly controlled by adjusting the duty ratio of current supplied to the coil 67. Therefore, if the control valve CV is operated at a predetermined duty ratio in the protective procedure, the refrigerant flow rate in the compressor will be sufficient for cooling the interior of the compressor. In other words, the cooling of the compressor is efficiently executed.
(3) The controller 70 refers to the external temperature and the engine speed when detecting the heating status of the compressor. Since the controller 70 detecting factors such as the external temperature and the engine speed, which influence the heating status of the compressor, the protective procedure is executed before the heating status actually deteriorates. This further improves the durability of the compressor.
(4) The controller 70 executes the protective procedure when the engine speed has been equal to or higher than the referential level for a predetermined period. Therefore, the protective procedure is not executed when the heating status of the compressor does not deteriorate. For example, when the engine speed is higher than the referential level only for a short period, for example, when the vehicle is accelerated, the protective procedure is not executed. Therefore, the control procedure of the engine E, or the running state of the vehicle, is scarcely influenced by the protective procedure.
(5) The controller 70 refers to the housing temperature and the refrigerant temperature when detecting the heating status of the compressor. In other words, the controller 70 directly detects the heating status of the compressor. This enables the controller 70 to appropriately execute the protective procedure.

It should be apparent to those skilled in the art that the present invention may be embodied in many other specific forms without departing from the spirit or scope of the invention. Particularly, it should be understood that the invention may be embodied in the following forms.

In the illustrated embodiment, the protective procedure is initiated when at least one of the following conditions is satisfied: the actual external temperature is equal to or higher than the referential external temperature; the actual housing temperature is equal to or higher than the referential housing temperature; the actual refrigerant temperature is equal to or higher than the referential refrigerant temperature; and the actual engine speed has been equal to or higher than the referential speed level. Alternatively, the protective procedure may be initiated only when two, three or all of the four conditions are satisfied.

During the protective procedure, the duty ratio for actuating the control valve CV may be varied in accordance with the degree of the deterioration of the heating status of the compressor. For example, as the engine speed is increased, the duty ratio may be increased for increasing the refrigerant flow rate in the external refrigerant circuit 30.

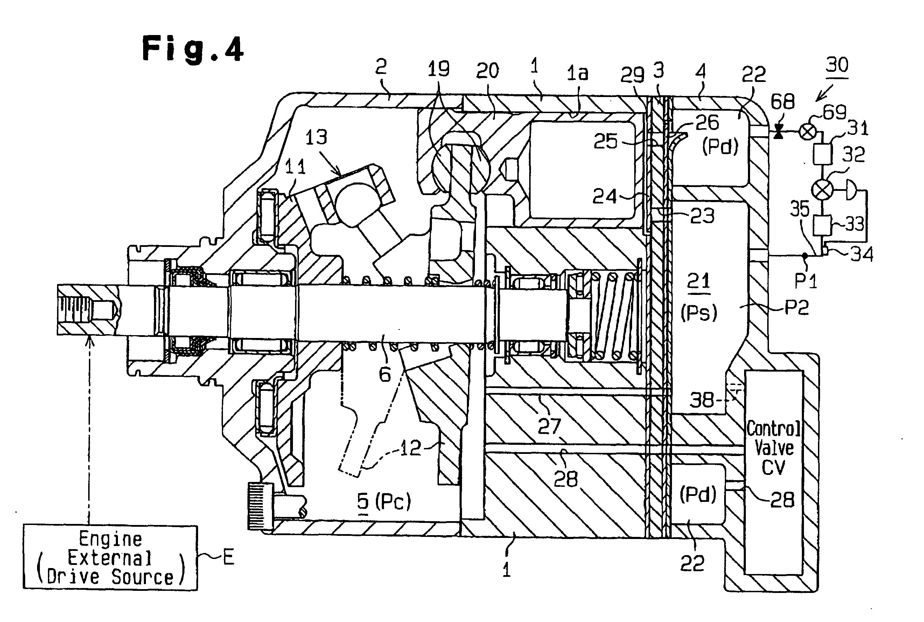

Fig. 4 illustrates a second embodiment of the present invention. In the second embodiment, the first pressure monitoring point P1 is located in a passage in the suction pressure zone, which includes the evaporator 33 and the suction chamber 21, and the second pressure monitoring point P2 is located at a part downstream of the first pressure monitoring point P1 in the suction pressure zone, for example, in the suction chamber 21.

The first pressure monitoring point P1 may be located in the high pressure zone between the discharge chamber 22 and the condenser 31, and the second pressure monitoring point P2 may be located in the crank chamber 5. The locations of the pressure monitoring points P1 and P2 are not limited to the main circuit of the refrigerant circuit, which includes the evaporator 33, the suction chamber 21, the compression chambers 29, the discharge chamber 22, and the condenser 31. For example, the pressure monitoring points P1, P2 may be located in an intermediate pressure zone, or a crank chamber pressure zone, in a sub-circuit of the refrigerant circuit. The sub-circuit includes the supply passage 28, the crank chamber 5, and the bleed passage 27.

The pressure sensing mechanism of the control valve CV may be changed. For example, the control valve CV may be actuated by one of the suction pressure Ps, the crank chamber pressure Pc, and the discharge pressure Pd. For example, in the illustrated embodiments, the second pressure monitoring point P2 may be omitted, and the second pressure chamber 56 may be a vacuum or exposed to the atmospheric pressure.

The control valve CV may be used as a bleed control valve for controlling the crank chamber pressure Pc by controlling the opening of the bleed passage 27.

The present invention may be embodied in a control valve of a wobble type variable displacement compressor.

Therefore, the present examples and embodiments are to be considered as illustrative and not restrictive and the invention is not to be limited to the details given herein, but may be modified within the scope and equivalence of the appended claims.

An apparatus controls a variable displacement compressor used in a refrigerant circuit. The compressor includes a drive shaft (6), which is rotated by an engine (E). When the drive shaft (6) rotates, the compressor compresses refrigerant sent from the external refrigerant circuit and discharges the compressed refrigerant to an external refrigerant circuit (30). When the displacement of the compressor is minimized, the circulation of refrigerant in the refrigerant circuit is stopped. The apparatus has a control mechanism (27, 28, CV) for varying the pressure in the crank chamber. A detector (76, 77, 78, 79) detects a physical quantity that reflects the heating status of the compressor. When the compressor displacement is minimized and the quantity detected by the detector (76, 77, 78, 79) indicates that the heating status of the compressor is deteriorating, a controller (70) commands the control mechanism (27, 28, CV) such that the displacement of the compressor is greater than the minimum displacement.

## Claims

1. An apparatus for controlling a variable displacement compressor used in a refrigerant circuit, wherein the refrigerant circuit includes the compressor and an external refrigerant circuit (30), which is connected to the compressor, wherein the compressor includes a drive shaft (6), which is rotated by an external drive source (E), wherein, when the drive shaft (6) rotates, the compressor compresses refrigerant sent from the external refrigerant circuit (30) and discharges the compressed refrigerant to the external refrigerant circuit (30), wherein the compressor varies the displacement of the compressor in accordance with the pressure of a crank chamber (5), and wherein, when the displacement of the compressor is minimized, the circulation of refrigerant in the refrigerant circuit is stopped, the apparatus being **characterized by**:
a control mechanism (27, 28, Cv) for varying the pressure in the crank chamber (5);
a detector (76, 77, 78, 79) for detecting a physical quantity that reflects the heating status of the compressor; and
a controller (70), wherein, when the compressor displacement is minimized and the quantity detected by the detector (76, 77, 78, 79) indicates that the heating status of the compressor is deteriorating, the controller (70) commands the control mechanism (27, 28, CV) such that the displacement of the compressor is greater than the minimum displacement.

2. The apparatus according to claim 1, **characterized in that** the control mechanism (27, 28, CV) has a control passage (27, 28), which connects the crank chamber (5) to a pressure zone in which the pressure is different from the pressure of the crank chamber (5), and wherein the control mechanism (27, 28, CV) has a control valve, wherein the control valve controls the opening degree of the control passage (27, 28), the control valve comprising:
a valve body (43);
a pressure sensing mechanism (48, 54, 55, 56) for detecting the pressure difference between two pressure monitoring points (P1, P2) which are located in the refrigerant circuit, wherein the pressure sensing mechanism (48, 54, 55, 56) has a pressure sensing member (54), which moves in accordance with the pressure difference between two pressure monitoring points (P1, P2), wherein the pressure sensing member (54) moves the valve body (43) in accordance with the pressure difference such that the displacement of the compressor is varied to counter changes of the pressure difference; and
an actuator (60) for applying force to the pressure sensing member (54) in accordance with external commands, wherein the force applied by the actuator (60) corresponds to a target value of the pressure difference, and wherein the pressure sensing member (54) moves the valve body (43) such that the pressure difference seeks the target value.

3. The apparatus according to claim 2, **characterized in that** the refrigerant circuit has a high pressure zone (Pd), which is exposed to the pressure of refrigerant that is compressed by the compressor, and wherein the control passage (27, 28) is a supply passage (28) for connecting the crank chamber (5) to the high pressure zone (Pd).

4. The apparatus according to any one of claims 1 to 3, **characterized in that** the physical quantity reflects the speed of the external drive source (E) and the detector (76, 77, 78, 79) has a rotation speed sensor (79) for detecting the quantity, and wherein, when the quantity detected by the rotation speed sensor (79) is greater than a predetermined referential value, the controller (70) determines that the heating status of the compressor is deteriorating.

5. The apparatus according to claim 4, **characterized in that**, when the quantity detected by the rotation speed sensor (79) has been greater than the predetermined referential value for more than a predetermined time period, the controller (70) determines that the heating status of the compressor is deteriorating.

6. The apparatus according to any one of claims 1 to 5, **characterized in that** the physical quantity reflects the refrigerant temperature in the compressor and the detector (76, 77, 78, 79) has a refrigerant temperature sensor (78) for detecting the quantity, and wherein, when the quantity detected by the refrigerant temperature sensor (78) is greater than a referential refrigerant value, the controller (70) determines that the heating status of the compressor is deteriorating.

7. The apparatus according to any one of claims 1 to 6, **characterized in that** the compressor is used for an air conditioner for a vehicle, and wherein the external drive source is an engine (E) of the vehicle.

8. The apparatus according to claim 7, **characterized in that** the drive shaft (6) is directly connected to the engine (E).

9. The apparatus according to any one of claims 1 to 8, **characterized in that** the refrigerant is carbon dioxide.

10. A method for controlling a variable displacement compressor used in a refrigerant circuit, wherein the refrigerant circuit includes the compressor and an external refrigerant circuit (30), which is connected to the compressor, wherein the compressor includes a drive shaft (6), which is rotated by an external drive source (E), wherein, when the drive shaft (6) rotates, the compressor compresses refrigerant sent from the external refrigerant circuit (30) and discharges the compressed refrigerant to the external refrigerant circuit (30), wherein the compressor varies the displacement of the compressor in accordance with the pressure of a crank chamber (5), and wherein, when the displacement of the compressor is minimized, the circulation of refrigerant in the refrigerant circuit is stopped, the method **being characterized by:**
detecting a physical quantity that reflects the heating status of the compressor; and
setting the displacement of the compressor to be greater than the minimum displacement of the compressor when the quantity detected by the detector (76, 77, 78, 79) indicates that the heating status of the compressor is deteriorating.
